# EUROPÄISCHE PATENTSCHRIFT

(11) **EP 3 543 498 B1**
(45) Veröffentlichungstag und Bekanntmachung des Hinweises auf die Patenterteilung: **11.10.2023**
(21) Anmeldenummer: 19162181.2
(22) Anmeldetag: 12.03.2019
(51) Int. Cl.: F01N 13/00

(54) **VERFAHREN ZUR HERSTELLUNG EINES SCHALLDÄMPFERS**
METHOD FOR PRODUCING A SILENCER
PROCÉDÉ DE PRODUCTION D'UN SILENCIEUX

(30) Priorität: 20.03.2018 DE 102018106429
(43) Veröffentlichungstag der Anmeldung: 25.09.2019
(73) Patentinhaber: Purem GmbH, 66539 Neunkirchen (DE)
(72) Erfinder: Bäumchen, Carsten, 66649 Oberthal (DE); Strobl, Fritz, 97357 Prichsenstadt (DE)
(74) Vertreter: Ruttensperger Lachnit Trossin Gomoll

(56) Entgegenhaltungen:
- EP-A1- 2 131 015
- EP-B1- 1 365 120
- WO-A1-2006/015730
- CA-A1- 2 443 427
- DE-A1- 4 316 870
- DE-A1- 10 358 504
- DE-B4- 10 358 504
- DE-C2- 4 316 870
- FR-A1- 2 902 138

## Beschreibung

Die vorliegende Erfindung betrifft ein Verfahren zur Herstellung eines Schalldämpfers für eine Abgasanlage einer Brennkraftmaschine bzw. einen Schalldämpfer für eine Abgasanlage einer Brennkraftmaschine.

Ein derartiger Schalldämpfer ist im Allgemeinen mit einem Schalldämpfergehäuse ausgebildet, das einen den von Abgas durchströmbaren Innenraum des Schalldämpfers nach radial außen bezüglich einer Gehäuselängsachse abschließenden, im Wesentlichen eine Umfangswandung bereitstellenden Gehäusemantel umfasst. An den axialen Endbereichen des Gehäusemantels sind Außenböden bereitstellende Gehäuseböden an dem Gehäusemantel festgelegt, welche den Innenraum des Schalldämpfers bzw. des Schalldämpfergehäuses im Wesentlichen in Richtung der Gehäuselängsachse abschließen. Zur festen Verbindung dieser Gehäuseböden mit dem Gehäusemantel sind die Gehäuseböden im Allgemeinen mit topfartiger Struktur ausgebildet und weisen einen beispielsweise im Wesentlichen orthogonal zur Gehäuselängsachse orientierten Bodenwandungsbereich und radial außen daran anschließend einen beispielsweise im Wesentlichen zylindrischen Verbindungwandungsbereich auf. Dieser Verbindungswandungsbereich wird in einen Endabschnitt des Gehäusemantels eingeschoben und durch eine in Umfangsrichtung umlaufende Schweißnaht daran gasdicht festgelegt.

Bei der Herstellung eines derart aufgebauten Schalldämpfers besteht ein Problem darin, dass eine definierte Positionierung der Gehäuseböden bezüglich des Gehäusemantels während der Herstellung des Schalldämpfers, insbesondere auch während der Durchführung des Schweißvorgangs zum Festlegen der Gehäuseböden am Gehäusemantel, nur durch außerhalb des Schalldämpfergehäuses positionierte Werkzeuge bzw. Haltevorrichtungen vorgegeben werden kann. Dies birgt jedoch die Gefahr, dass ein Gehäuseboden bezüglich des Gehäusemantels verschoben wird, insbesondere in das Innere des Gehäusemantels hinein verschoben wird, und somit nicht in der korrekten Positionierung bezüglich des Gehäusemantels an diesem festgelegt wird.

Die DE 103 58 504 A1 offenbart ein Verfahren zur Herstellung eines Katalysatorgehäuses, bei welchem aufeinanderfolgend anzuordnende Abschnitte eines in Richtung einer Gehäuselängsachse langgestreckten Gehäusemantels aufeinander aufgeschoben werden. Dazu weist einer der Abschnitte des Gehäusemantels in seinem axialen Endbereich einen näherungsweise konisch geformten Verengungsbereich auf, in welchem der Durchmesser des Gehäusemantelabschnitts abnimmt. Auf den Verengungsbereich folgt ein näherungsweise zylindrischer Abschnitt, auf welchen ein axialer Endbereich eines folgenden Abschnitts des Gehäusemantels aufgeschoben wird.

Die WO 2006/015730 A1 offenbart eine Fahrzeugabgasreinigungsvorrichtung mit einem zylindrisch ausgebildeten Gehäusemantel. In einem axialen Endbereich des Gehäusemantels kann eine in Umfangsrichtung umlaufende Sicke eingebracht sein, über welche eine rillenförmige Vertiefung einer an dem Gehäusemantel festzulegenden Stirnwand einrastet.

Ein Schalldämpfer gemäß dem Oberbegriff des Anspruchs 14 ist aus der WO 2006/015730 A1 bekannt. Bei diesem bekannten Schalldämpfer ist in einem axialen Endbereich eines im Wesentlichen zylindrischen Gehäusemantels eine Anschlagformation mit einer Mehrzahl von in Umfangsrichtung aufeinander folgenden und bezüglich einer Gehäuselängsachse nach radial außen vorstehenden Anschlagvorsprüngen vorgesehen.

Es ist die Aufgabe der vorliegenden Erfindung, ein Verfahren zur Herstellung eines Schalldämpfers für eine Abgasanlage einer Brennkraftmaschine bzw. einen Schalldämpfer für eine derartige Abgasanlage bereitzustellen, bei welchen mit einfachen Maßnahmen eine definierte Positionierung eines oder mehrerer Gehäuseböden bezüglich eines Gehäusemantels eines Schalldämpfergehäuses vorgegeben werden kann.

Erfindungsgemäß wird diese Aufgabe gelöst durch ein Verfahren zur Herstellung eines Schalldämpfers für eine Abgasanlage einer Brennkraftmaschine, wobei der herzustellende Schalldämpfer ein Schalldämpfergehäuse mit einem in Richtung einer Gehäuselängsachse langgestreckten Gehäusemantel und wenigstens einem an dem Gehäusemantel getragenen Gehäuseboden umfasst, umfassend die Maßnahmen:
a) Bereitstellen des Gehäusemantels mit einer Anschlagformation in Zuordnung zu wenigstens einem an dem Gehäusemantel zu tragenden Gehäuseboden,
b) Bereitstellen wenigstens eines an dem Gehäusemantel zu tragenden Gehäusebodens,
c) Positionieren wenigstens eines Gehäusebodens an dem Gehäusemantel derart, dass der Gehäuseboden an der diesem zugeordneten Anschlagformation anliegt.

Bei der Maßnahme a) wird der Gehäusemantel in wenigstens einem axialen Endbereich mit einem Radialerweiterungsbereich und an den Radialerweiterungsbereich anschließend einem im Wesentlichen zylindrischen Endabschnitt zur Aufnahme eines Gehäusebodens bereitgestellt. Im Radialerweiterungsbereich ist dabei eine Anschlagformation vorgesehen, die eine Mehrzahl von in Umfangsrichtung um die Gehäuselängsachse mit Abstand zueinander angeordneten, in einen von dem Gehäusemantel umgebenen Gehäuseinnenraum vorstehenden Anschlagvorsprüngen umfasst. Somit wird eine Mehrzahl von Abstützpunkten für den auf diese Weise definiert positioniert gehaltenen Gehäuseboden vorgesehen.

Durch das Vorsehen einer derartigen Anschlagformation in Zuordnung zu wenigstens einem Gehäuseboden wird es möglich, durch die Positionierung der Anschlagformation eine entsprechend definierte Positionierung für den daran sich insbesondere in Richtung der Gehäuselängsachse des Schalldämpfergehäuses abstützenden Gehäuseboden vorzugeben. Damit kann vor allem ein undefiniertes Verschieben eines Schalldämpferbodens in den Gehäuseinnenraum hinein unterbunden werden, was durch außerhalb des herzustellenden Schalldämpfergehäuses vorzusehende Haltewerkzeuge nur mit großem Aufwand und nur bedingt erreicht werden kann.

Für eine stabile Halterung eines Gehäusebodens an dem Gehäusemantel wird vorgeschlagen, dass nach der Maßnahme c) eine Maßnahme d) zum Festlegen wenigstens eines an einer Anschlagformation anliegenden Gehäusebodens an dem Gehäusemantel durchgeführt wird.

Um eine definierte Positionierung eines am Gehäusemantel festzulegenden Gehäusebodens auch während des Vorgangs zum Festlegen des Gehäusebodens am Gehäusemantel zu gewährleisten, kann ferner vorgesehen sein, dass bei der Durchführung der Maßnahme d) der Gehäuseboden in Anlage an der diesem zugeordneten Anschlagformation gehalten wird.

Eine insbesondere auch gasdichte, stabile Verbindung kann dadurch erreicht werden, dass bei der Maßnahme d) der Gehäuseboden durch Materialschluss, vorzugsweise Verschweißen, an dem Gehäusemantel festgelegt wird.

Beispielsweise kann bei wenigstens einer Anschlagformation wenigstens ein, vorzugsweise jeder Anschlagvorsprung durch eine zum Gehäuseinnenraum gerichtete, vorzugsweise topfartige Ausformung im Gehäusemantel bereitgestellt sein.

Bei einer weiteren Ausgestaltungsform wird vorgeschlagen, dass bei wenigstens einer Anschlagformation wenigstens ein, vorzugsweise jeder Anschlagvorsprung durch einen eine Öffnung in dem Gehäusemantel durchsetzenden Anschlagstift bereitgestellt ist.

Um zu gewährleisten, dass die bei Durchführung der Maßnahme d) im Allgemeinen nach außen über den Gehäusemantel hervorstehenden Anschlagstifte sich nach Fertigstellung eines Schalldämpfers nicht mit anderen Komponenten stören, wird weiter vorgeschlagen, dass nach Durchführung der Maßnahme d) alle einem bei der Maßnahme c) am Gehäusemantel festgelegten Gehäuseboden zugeordneten Anschlagstifte aus den diese aufnehmenden Öffnungen entfernt werden und die Öffnungen verschlossen werden.

Dabei kann ein insbesondere auch gasdichter Abschluss in einfacher Weise dadurch erreicht werden, dass wenigstens eine, vorzugsweise jede Öffnung durch Materialschluss, vorzugsweise Verschweißen, verschlossen wird, oder/und dass wenigstens eine, vorzugsweise jede Öffnung durch ein Verschlusselement, vorzugsweise Verschlussniet, verschlossen wird.

Bei einer weiteren erfindungsgemäßen Ausgestaltungsvariante kann wenigstens eine Anschlagformation durch wenigstens eine in Umfangsrichtung um die Gehäuselängsachse wenigstens bereichsweise umlaufende, in einen von dem Gehäusemantel umgebenen Gehäuseinnenraum vorstehende, sickenartige Ausformung bereitgestellt sein.

Bei der Maßnahme b) kann wenigstens ein an dem Gehäusemantel zu tragender Gehäuseboden mit einem Bodenwandungsbereich und einem in einem Außenumfangsbereich an den Bodenwandungsbereich anschließenden, im Wesentlichen zylindrischen Verbindungswandungsbereich bereitgestellt werden, und der Gehäuseboden kann bei der Maßnahme c) mit seinem Verbindungswandungsbereich an der Anschlagformation anliegend positioniert werden. Die so generierte axiale Überlappung im Wesentlichen zylindrischer Wandungsbereiche unterstützt die stabile Halterung eines Gehäusebodens am Gehäusemantel.

Dies kann weiter dadurch unterstützt werden, dass bei der Maßnahme d) der Gehäuseboden im Bereich seines Verbindungwandungsbereichs an dem Gehäusemantel festgelegt wird.

Für eine baulich einfach zu realisierende Ausgestaltung des Schalldämpfergehäuses kann bei der Maßnahme a) der Gehäusemantel mit zwei in z.B. im Wesentlichen in Richtung der Gehäuselängsachse sich erstreckenden Verbindungsbereichen aneinander anschließend zu positionierenden Mantelschalen bereitgestellt werden.

Bei der Maßnahme b) kann wenigstens ein Gehäuseboden als ein den von dem Gehäusemantel umgebenen Gehäuseinnenraum in Richtung der Gehäuselängsachse abschließender Außenboden bereitgestellt werden. Ferner kann bei der Maßnahme b) wenigstens ein Gehäuseboden mit wenigstens einer Öffnung zur Aufnahme eines Abgasrohrs bereitgestellt werden. Es ist darauf hinzuweisen, dass die Prinzipien der vorliegenden Erfindung auch Anwendung finden können bei der Festlegung von im Inneren des Schalldämpfergehäuses vorgesehenen und beispielsweise darin gebildete Kammern voneinander trennenden, Innenböden des Schalldämpfergehäuses bereitstellenden Gehäuseböden.

Nach der Maßnahme d) kann eine Maßnahme e) zum Festlegen eines Abgasrohrs an einem Gehäuseboden durchgeführt werden.

Die Erfindung betrifft ferner einen Schalldämpfer für eine Abgasanlage einer Brennkraftmaschine gemäß Anspruch 14, umfassend ein Schalldämpfergehäuse mit einem in Richtung einer Gehäuselängsachse langgestreckten Gehäusemantel und wenigstens einem an dem Gehäusemantel getragenen Gehäuseboden, wobei an dem Gehäusemantel wenigstens eine Anschlagformation zur Abstützung eines Gehäusebodens im wesentlichen in Richtung der Gehäuselängsachse vorgesehen ist.

Es ist darauf hinzuweisen, dass ein derartiger Schalldämpfer mit den vorangehend beschriebenen, für den Aufbau eines Schalldämpfers spezifischen konstruktiven Merkmalen einzeln und in beliebiger Kombination ausgebildet sein kann.

Der erfindungsgemäße Schalldämpfer ist so ausgebildet, dass die Anschlagformation eine Mehrzahl von in einem Radialerweiterungsbereich des Gehäusemantels in Umfangsrichtung um die Gehäuselängsachse mit Abstand zueinander angeordneten, in einen von dem Gehäusemantel umgebenen Gehäuseinnenraum vorstehenden Anschlagvorsprüngen umfasst.

Die vorliegende Erfindung wird nachfolgend mit Bezug auf die beiliegenden Figuren detailliert beschrieben. Es zeigt:
- Fig. 1: in prinzipartiger Darstellung einen mit einem Schalldämpfergehäuse aufgebauten Schalldämpfer für eine Abgasanlage einer Brennkraftmaschine;
- Fig. 2: in vergrößerter Darstellung das Detail Ader Fig. 1 während der Herstellung des Schalldämpfers;
- Fig. 3: eine der Fig. 2 entsprechende Darstellung einer alternativen Ausgestaltung.

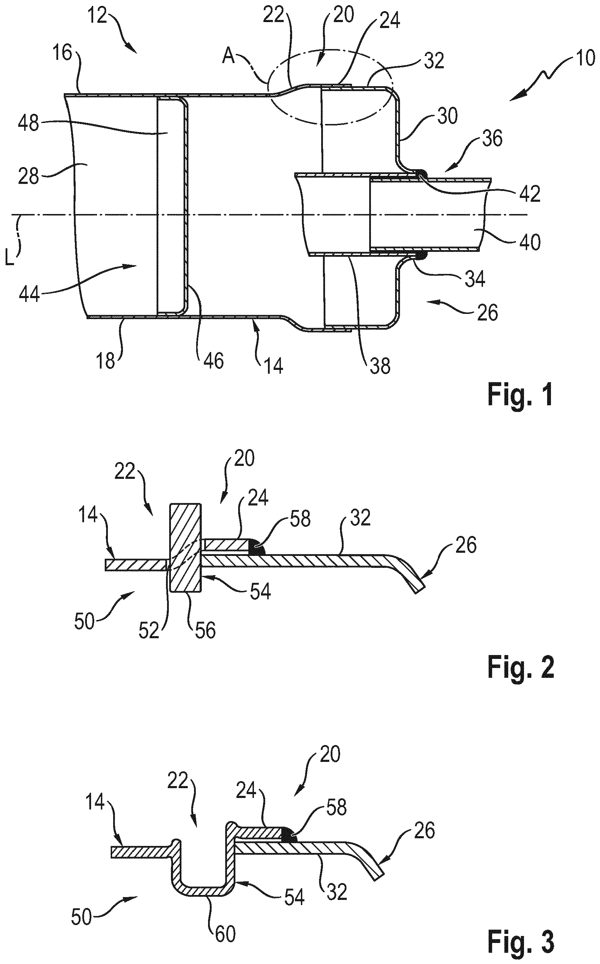

In Figur 1 ist ein allgemein mit 10 bezeichneter Schalldämpfer für eine Abgasanlage einer Brennkraftmaschine, beispielsweise eines Kraftfahrzeugs, in prinzipartiger Teildarstellung zu sehen. Der Schalldämpfer 10 umfasst ein Schalldämpfergehäuse 12 mit einem eine Umfangswandung bereitstellenden Gehäusemantel 14. Der Gehäusemantel 14 kann beispielsweise mit zwei als Blechumformteile bereitgestellten Mantelschalen 16, 18 aufgebaut sein, die in im Wesentlichen in Richtung einer Gehäuselängsachse L sich erstreckenden Verbindungsbereichen aneinander anschließen können.

In dem in Figur 1 rechts erkennbaren axialen Endbereich 20 ist der Gehäusemantel 14 mit einem Radialerweiterungsbereich 22 und einem daran anschließenden, im Wesentlichen zylindrisch gestalteten Endabschnitt 24 ausgebildet. In diesen Endabschnitt 24 des Gehäusemantels 14 greift ein allgemein mit 26 bezeichneter und einen Außenboden des Schalldämpfergehäuses 12 bereitstellender Gehäuseboden ein. Der Gehäuseboden 26, welcher den von dem Gehäusemantel 14 nach radial außen begrenzten Innenraum 28 des Schalldämpfergehäuses 12 in Richtung der Gehäuselängsachse L abschließt, ist mit einem Bodenwandungsbereich 30 und radial außen an diesen anschließend einem im Wesentlichen zylindrisch ausgebildeten Verbindungswandungsbereich 32 aufgebaut. Auch der Gehäuseboden 26 ist vorzugsweise als Blechumformteil bereitgestellt und kann eine beispielsweise durch einen nach radial außen gerichteten Umformungsbereich 34 gebildete Öffnung 36 aufweisen. Der Umformungsbereich 34 kann beispielsweise als Durchzug bereitgestellt sein. In den Umformungsbereich 34 ist ein im Innenraum 28 sich erstreckendes und zu einer oder mehreren im Schalldämpfergehäuse 12 gebildeten Kammern offenes Innenrohr 38 aufgenommen, beispielsweise derart, dass dieses Innenrohr 38 in Richtung der Gehäuselängsachse L im Wesentlichen bündig mit dem Ausformungsbereich 34 endet. Von außen kann in das Innenrohr 38 ein Abgasrohr 40 eingeschoben sein und durch eine Schweißnaht 42 zusammen mit dem Innenrohr 38 am Gehäuseboden 26 gasdicht festgelegt sein. Es ist darauf hinzuweisen, dass die Öffnung 36 auch an anderer Position des Gehäusebodens 26 vorgesehen sein kann, dass am Gehäuseboden 26 mehrere derartige Öffnungen zur Aufnahme eines Abgasrohrs vorgesehen sein können oder dass ein derartiger Gehäuseboden 26 vollständig ohne Öffnung zur Aufnahme eines Abgasrohrs ausgebildet sein kann.

Im Innenraum 28 des Schalldämpfergehäuses 12 können eine oder mehrere als Innenwandungen ausgebildete Gehäuseböden 44 vorgesehen sein. Auch diese können, so wie der als Außenboden aufgebaute Gehäuseboden 26, mit einem Bodenwandungsbereich 46 und einem innen an dem Gehäusemantel 14 anliegenden Verbindungswandungsbereich 48 aufgebaut sein. Durch einen oder mehrere derartige als Innenböden wirksame Gehäuseböden 44 wird der Innenraum 28 des Schalldämpfergehäuses 12 in mehrere Kammern unterteilt. Diese können über das Innenrohr 38 oder ein oder mehrere weitere Innenrohre oder über in einem jeweiligen Gehäuseboden 44 vorgesehene Öffnungen in Verbindung miteinander stehen.

Bei der Herstellung eines derartigen Schalldämpfers 10 wurden zunächst die im Innenraum 28 anzuordnenden Komponenten beispielsweise im Bereich von einer der Mantelschalen 16, 18 positioniert. Daraufhin kann die andere dieser beiden Mantelschalen 16, 18 aufgesetzt werden. Vor oder nach diesem Aufsetzen der zweiten Gehäuseschale können in den beiden Endbereichen die dort jeweils vorzusehenden Gehäuseböden, insbesondere also auch der in Figur 1 erkennbare Gehäuseboden 26, derart positioniert werden, dass der Verbindungswandungsbereich 32 sich in Richtung der Gehäuselängsachse L mit dem Endabschnitt 24 des Gehäusemantels 14 überlappt. Nachfolgend wird der Gehäuseboden 26 bzw. jeder als Außenboden wirksame Gehäuseboden durch eine in Umfangsrichtung umlaufende Schweißnaht im Bereich seines Verbindungswandungsbereichs 32 am Endabschnitt 24 des Gehäusemantels 14 festgelegt.

Mit Bezug auf die Figuren 2 und 3 werden nachfolgend Maßnahmen beschrieben, mit welchen dafür gesorgt wird, dass bei dem Zusammenbau des Schalldämpfergehäuses 12 eine definierte Positionierung der am Gehäusemantel 14 vorzusehenden Gehäuseböden 26 bzw. 44 gewährleistet werden kann.

Die Figur 2 zeigt vergrößert den Bereich, in welchem der Verbindungswandungsbereich 32 des Gehäusebodens 26 sich in den Endabschnitt 24 des Gehäusemantels 14 hinein erstreckt. Um ein übermäßig weites Verschieben des Gehäusebodens 26 in den Innenraum 28 des Schalldämpfergehäuses 12 hinein zu verhindern, ist eine allgemein mit 50 bezeichnete Anschlagformation vorgesehen. Diese umfasst im dargestellten Beispiel im Radialerweiterungsbereich 22 des Gehäusemantels 14 in Umfangsrichtung um die Gehäuselängsachse L verteilt mehrere, vorzugsweise zumindest drei, Öffnungen 52, durch welche hindurch jeweilige Anschlagvorsprünge 54 bereitstellende Anschlagstifte 56 geführt sind.

Dabei können die Öffnungen 52 und die Anschlagstifte 56 derart bemessen sein, dass die in die Öffnungen 52 eingesetzten Anschlagstifte 56 darin durch Presspassung, also Reibschluss, gehalten werden.

Nach Bereitstellen des Gehäusemantels 14, gegebenenfalls mit den im Innenraum 28 aufzunehmenden Baugruppen, und mit der daran vorzusehenden und die Anschlagstifte 56 umfassenden Anschlagformation 50, und nach Bereitstellen des Gehäusebodens 26 in derartiger Weise, dass beispielsweise das Innenrohr 38 bereits in die Ausformung 34 eingesetzt und darin beispielsweise durch Presspassung gehalten, jedoch noch nicht am Gehäuseboden 26 festgelegt ist, wird der Gehäuseboden 26 im Endbereich 20 des Gehäusemantels 14 derart positioniert, dass der Verbindungswandungsbereich 32 in Richtung der Gehäuselängsachse L an den Anschlagstiften 56 abgestützt wird. Auf diese Art und Weise ist der Gehäuseboden 26 in definierter Positionierung bezüglich des Gehäusemantels 14 gehalten und ein übermäßig weites Einschieben des Gehäusebodens 26 in den Gehäusemantel 14 wird verhindert. Durch eine von außen aufgebrachte, auch in Richtung der Gehäuselängsachse L orientierte Kraft, beispielsweise bereitgestellt durch ein entsprechendes Haltewerkzeug, wird der Gehäuseboden 26 in Anlage an den Anschlagstiften 56 der Anschlagformation 50 gehalten. In diesem Zustand kann nachfolgend die um die Gehäuselängsachse L vorzugsweise vollständig umlaufende Schweißnaht 58 gebildet werden, um dadurch den Gehäuseboden 26 am Gehäusemantel 14 festzulegen. Entsprechend kann in dem anderen, in Figur 1 nicht dargestellten Endbereich des Gehäusemantels 14 mit dem dort am Gehäusemantel 14 festzulegenden Gehäuseboden verfahren werden.

Nach Festlegung des bzw. der Gehäuseböden am Gehäusemantel 14 kann dann beispielsweise in den Gehäuseboden 26 das Abgasrohr 40 derart eingeschoben werden, dass es sich in das Innenrohr 38 hinein erstreckt. Durch die dann herzustellende Schweißnaht 42 kann das Abgasrohr 40 zusammen mit dem Innenrohr 38 an der Ausformung 34 des Bodenwandungsbereichs 30 festgelegt werden.

In einem dann folgenden Arbeitsvorgang können die Anschlagstifte 56 aus den diese aufnehmenden Öffnungen 52 entfernt werden. Um den Abgasaustritt zu verhindern, werden die Öffnungen 52 gasdicht verschlossen. Dies kann beispielsweise durch das Aufbringen von Schweißmaterial, also durch Materialschluss, erfolgen. Alternativ oder zusätzlich können die Öffnungen 52 durch gas- und flüssigkeitsdichte Niete, insbesondere Blindniete, verschlossen werden.

Eine alternative Ausgestaltung ist in Figur 3 dargestellt. Bei dieser Ausgestaltung umfasst die Anschlagformation 50 beispielsweise im Radialerweiterungsbereich 22 des Gehäusemantels 14 mehrere in Umfangsrichtung aufeinander folgend angeordnete, durch topfartige Ausformungen 60 bereitgestellte Anschlagvorsprünge 54. Diese topfartigen Ausformungen 60 können beim Umformen eines Blechrohlings zur Herstellung der Mantelschalen 16, 18 des Gehäusemantels 14 eingebracht werden. An diesen durch die topfartigen Ausformungen 60 bereitgestellten Anschlagvorsprüngen 54 kann der Gehäuseboden 26 sich mit seinem Verbindungswandlungsbereich 32 abstützend positioniert werden, so dass nachfolgend in einem Verbindungsvorgang die Schweißnaht 58 zur festen und gasdichten Anbindung des Gehäusebodens 26 an den Gehäusemantel 14 erzeugt werden kann. Da die topfartigen Ausformungen 60 keine Öffnung aufweisen, ist bei dieser Ausgestaltungsvariante kein weiterer Arbeitsgang zum Erzeugen eines dichten Abschlusses erforderlich.

Es ist abschließend darauf hinzuweisen, dass auch ein oder mehrere als Innenböden ausgebildete Gehäuseböden 44 durch derartige Anschlagformationen definiert bezüglich des Gehäusemantels 14 positioniert sein können. Zu diesem Zwecke können in den axialen Bereichen des Gehäusemantels 14 bzw. der Gehäuseschalen 16, 18 desselben dort, wo ein jeweiliger Gehäuseboden 44 im Innenraum 28 zu positionieren ist, derartige Anschlagformationen 50, beispielsweise mit Anschlagstiften 56 oder mit topfartigen Ausformungen 60, vorgesehen werden. Erforderlichenfalls ist es möglich, in Zuordnung zu einem derartigen im Innenraum 28 anzuordnenden Gehäuseboden 44 zwei derartige Anschlagformationen 50 vorzusehen, um diesen Gehäuseboden 44 in beiden axialen Richtungen definiert abzustützen.

Ferner ist darauf hinzuweisen, dass die in den Figuren 2 und 3 dargestellten Formgebungen und Positionierungen der Anschlagvorsprünge 54 nur beispielhaft dargestellt sind. So könnten beispielsweise die Anschlagvorsprünge 54 auch im im Wesentlichen zylindrisch gestalteten Endabschnitt 24 des Gehäusemantels 14 positioniert sein. Bei Ausgestaltung als in den Innenraum 28 gerichtete Ausformungen 60 können diese eine andere, beispielsweise eine kegelartige oder kegelstumpfartige Struktur aufweisen. Grundsätzlich könnten derartige Ausformungen auch als in Umfangsrichtung zumindest bereichsweise umlaufende nuten- bzw. sickenartige Einsenkungen bereitgestellt sein.

Mit dem erfindungsgemäßen Aufbau eines Schalldämpfers bzw. der erfindungsgemäßen Vorgehensweise zur Herstellung eines derartigen Schalldämpfers wird es mit baulich einfachen Maßnahmen möglich, eine definierte Positionierung der miteinander zu verbindenden Komponenten Gehäusemantel und Gehäuseböden zu gewährleisten und damit eine maßhaltige Fertigung vorzusehen. Dadurch werden der bei der Herstellung von Schalldämpfern entstehende Ausschuss und das Ausmaß an erforderlicher Nachbearbeitung deutlich verringert. Auch Folgeprozesse, wie z. B. das Anbringen von Halterungen an den Gehäuseböden oder das vorangehend beschriebene Festlegen von Abgasrohren im Bereich von Öffnungen in Gehäuseböden, sind in einfacher und definierter Weise durchführbar.

## Patentansprüche

1. Verfahren zur Herstellung eines Schalldämpfers für eine Abgasanlage einer Brennkraftmaschine, wobei der herzustellende Schalldämpfer (10) ein Schalldämpfergehäuse (12) mit einem in Richtung einer Gehäuselängsachse (L) langgestreckten Gehäusemantel (14) und wenigstens einem an dem Gehäusemantel (14) getragenen Gehäuseboden (26, 44) umfasst, umfassend die Maßnahmen:
a) Bereitstellen des Gehäusemantels (14) mit einer Anschlagformation (50) in Zuordnung zu wenigstens einem an dem Gehäusemantel (14) zu tragenden Gehäuseboden (26),
b) Bereitstellen wenigstens eines an dem Gehäusemantel (14) zu tragenden Gehäusebodens (26, 44),
c) Positionieren wenigstens eines Gehäusebodens (26) an dem Gehäusemantel (14) derart, dass der Gehäuseboden (26) an der diesem zugeordneten Anschlagformation (50) anliegt,
wobei bei der Maßnahme a) der Gehäusemantel (14) in wenigstens einem axialen Endbereich (20) mit einem Radialerweiterungsbereich (22) und an den Radialerweiterungsbereich (22) anschließend einem im Wesentlichen zylindrischen Endabschnitt (24) zur Aufnahme eines Gehäusebodens (26) bereitgestellt wird, und wobei im Radialerweiterungsbereich (22) eine Anschlagformation (50) mit einer Mehrzahl von in Umfangsrichtung um die Gehäuselängsachse (L) mit Abstand zueinander angeordneten, in einen von dem Gehäusemantel (14) umgebenen Gehäuseinnenraum (28) vorstehenden Anschlagvorsprüngen (54) vorgesehen ist.

2. Verfahren nach Anspruch 1, **dadurch gekennzeichnet, dass** nach der Maßnahme c) eine Maßnahme d) zum Festlegen wenigstens eines an einer Anschlagformation (50) anliegenden Gehäusebodens (26) an dem Gehäusemantel (14) durchgeführt wird.

3. Verfahren nach Anspruch 2, dass bei der Durchführung der Maßnahme d) der Gehäuseboden (26) in Anlage an der diesem zugeordneten Anschlagformation (50) gehalten wird, oder/und dass bei der Maßnahme d) der Gehäuseboden (26) durch Materialschluss, vorzugsweise Verschweißen, an dem Gehäusemantel (14) festgelegt wird.

4. Verfahren nach einem der vorangehenden Ansprüche, **dadurch gekennzeichnet,**
**dass** bei wenigstens einer Anschlagformation (50) wenigstens ein, vorzugsweise jeder Anschlagvorsprung (54) durch eine zum Gehäuseinnenraum (28) gerichtete, vorzugsweise topfartige Ausformung (60) im Gehäusemantel (14) bereitgestellt ist.

5. Verfahren nach Anspruch 4, **dadurch gekennzeichnet,**
**dass** bei wenigstens einer Anschlagformation (50) wenigstens ein, vorzugsweise jeder Anschlagvorsprung (54) durch einen eine Öffnung (52) in dem Gehäusemantel (14) durchsetzenden Anschlagstift (56) bereitgestellt ist.

6. Verfahren nach Anspruch 2 und Anspruch 5, **dadurch gekennzeichnet, dass** nach Durchführung der Maßnahme d) alle einem bei der Maßnahme c) am Gehäusemantel (14) festgelegten Gehäuseboden (26) zugeordneten Anschlagstifte (56) aus den diese aufnehmenden Öffnungen (52) entfernt werden und die Öffnungen (52) verschlossen werden.

7. Verfahren nach Anspruch 6, **dadurch gekennzeichnet, dass** wenigstens eine, vorzugsweise jede Öffnung (52) durch Materialschluss, vorzugsweise Verschweißen, verschlossen wird, oder/und dass wenigstens eine, vorzugsweise jede Öffnung (52) durch ein Verschlusselement, vorzugsweise Verschlussniet, verschlossen wird.

8. Verfahren nach einem der vorangehenden Ansprüche, **dadurch gekennzeichnet, dass** wenigstens eine Anschlagformation (50) durch wenigstens eine in Umfangsrichtung um die Gehäuselängsachse (L) wenigstens bereichsweise umlaufende, in einen von dem Gehäusemantel umgebenen Gehäuseinnenraum (28) vorstehende, sickenartige Ausformung bereitgestellt ist.

9. Verfahren einem der vorangehenden Ansprüche, **dadurch gekennzeichnet, dass** bei der Maßnahme b) wenigstens ein an dem Gehäusemantel (14) zu tragender Gehäuseboden (26, 44) mit einem Bodenwandungsbereich (30, 46) und einem in einem Außenumfangsbereich an den Bodenwandungsbereich (30, 46) anschließenden, im Wesentlichen zylindrischen Verbindungswandungsbereich (32, 48) bereitgestellt wird, und dass der Gehäuseboden (26) bei der Maßnahme c) mit seinem Verbindungswandungsbereich (30) an der Anschlagformation (50) anliegend positioniert wird.

10. Verfahren nach Anspruch 2 und Anspruch 9, **dadurch gekennzeichnet, dass** bei der Maßnahme d) der Gehäuseboden (14) im Bereich seines Verbindungwandungsbereichs (32) an dem Gehäusemantel (14) festgelegt wird.

11. Verfahren nach einem der vorangehenden Ansprüche, **dadurch gekennzeichnet,**
**dass** bei der Maßnahme a) der Gehäusemantel (14) mit zwei in vorzugsweise in Richtung der Gehäuselängsachse (L) sich erstreckenden Verbindungsbereichen aneinander anschließend zu positionierenden Mantelschalen (16, 18) bereitgestellt wird.

12. Verfahren einem der vorangehenden Ansprüche, **dadurch gekennzeichnet, dass** bei der Maßnahme b) wenigstens ein Gehäuseboden (26) als einen von dem Gehäusemantel (14) umgebenen Gehäuseinnenraum (28) in Richtung der Gehäuselängsachse (L) abschließender Außenboden bereitgestellt wird, oder/und dass bei der Maßnahme b) wenigstens ein Gehäuseboden (26) mit wenigstens einer Öffnung (36) zur Aufnahme eines Abgasrohrs (40) bereitgestellt wird.

13. Verfahren nach Anspruch 2 und Anspruch 12, **dadurch gekennzeichnet, dass** nach der Maßnahme d) eine Maßnahme e) zum Festlegen eines Abgasrohrs (40) an einem Gehäuseboden (26) durchgeführt wird.

14. Schalldämpfer für eine Abgasanlage einer Brennkraftmaschine, umfassend ein Schalldämpfergehäuse (12) mit einem in Richtung einer Gehäuselängsachse (L) langgestreckten Gehäusemantel (14) und wenigstens einem an dem Gehäusemantel (14) getragenen Gehäuseboden (26, 44), wobei an dem Gehäusemantel (14) wenigstens eine Anschlagformation (50) mit einer Mehrzahl von in Umfangsrichtung um die Gehäuselängsachse (L) mit Abstand zueinander angeordneten Anschlagvorsprüngen (24) zur Abstützung eines Gehäusebodens (26) im wesentlichen in Richtung der Gehäuselängsachse (L) vorgesehen ist, **dadurch gekennzeichnet, dass** der Gehäusemantel (14) in wenigstens einem axialen Endbereich (20) einen Radialerweiterungsbereich (22) aufweist, und dass die Anschlagvorsprünge (24) der Anschlagformation (50) in dem Radialerweiterungsbereich (22) angeordnet sind und in einen von dem Gehäusemantel (14) umgebenen Gehäuseinnenraum (28) vorstehen.

## Claims

1. Process for manufacturing a muffler for an exhaust system of an internal combustion engine, wherein the muffler (10) to be manufactured comprises a muffler housing (12) with a housing jacket (14) elongated in the direction of a housing longitudinal axis (L) and with at least one housing bottom (26, 44) carried on the housing jacket (14), comprising the steps of:
a) providing the housing jacket (14) with a stop formation (50) in association with at least one housing bottom (26) to be carried on the housing jacket (14),
b) providing at least one housing bottom (26, 44) to be carried on the housing jacket (14), and
c) positioning of at least one housing bottom (26) on the housing jacket (14) such that the housing bottom (26) is in contact with the stop formation (50) associated with it,
wherein in step a) the housing jacket (14) is provided in at least one axial end area (20) with a radial expansion area (22) and, adjoining the radial expansion area (22), with an essentially cylindrical end section (24) for receiving a housing bottom (26), and wherein a stop formation (50) is provided in the radial expansion area (22) with a plurality of stop projections (54), which are arranged at spaced locations from one another about the housing longitudinal axis (L) in the circumferential direction and project into a housing interior (28) enclosed by the housing jacket (14).

2. Process in accordance with claim 1, **characterized in that** after step c), a step d) is carried out for fixing at least one housing bottom (26) that is in contact with a stop formation (50) to the housing jacket (14).

3. Process in accordance with claim 2, **characterized in that** when step d) is carried out, the housing bottom (26) is in contact with the stop formation (50) associated with it, or/and that the housing bottom (26) is fixed in step d) to the housing jacket (14) by connection in substance, preferably welding.

4. Process in accordance with one of the above claims, **characterized in that** in at least one stop formation (50) at least one and preferably each stop projection (54) is provided by a preferably pot-like bulge (60) directed towards the housing interior (28) in the housing jacket (14).

5. Process in accordance with claim 4, **characterized in that** in at least one stop formation (50) at least one and preferably each stop projection (54) is provided by a positioning pin (56) passing through an opening (52) in the housing jacket (14).

6. Process in accordance with claim 2 and claim 5, **characterized in that** after carrying out step d), all the positioning pins (56) associated with a housing bottom (26) fixed to the housing jacket (14) in step c) are removed from the openings (52) receiving them and the openings (52) are closed.

7. Process in accordance with claim 6, **characterized in that** at least one and preferably each opening (52) is closed by connection in substance, preferably welding, or/and that at least one and preferably each opening (52) is closed by a closing element, preferably a closing rivet.

8. Process in accordance with one of the above claims, **characterized in that** at least one stop formation (50) is provided by a beaded bulge, which extends in the circumferential direction about the housing longitudinal axis (L) in at least some areas and projects into a housing interior (28) enclosed by the housing jacket.

9. Process in accordance with one of the above claims, **characterized in that** at least one housing bottom (26, 44) to be carried on the housing jacket (14) is provided in step b) with a bottom wall area (30, 46) and with an essentially cylindrical connecting wall area (32, 48), which adjoins the bottom wall area (30, 46) in an outer circumferential area, and that the housing bottom (26) is positioned in step c) with its connecting wall area (30) such that it is in contact with the stop formation (50).

10. Process in accordance with claim 2 and claim 9, **characterized in that** the housing bottom (14) is fixed in step d) in the area of its connecting wall area (32) to the housing jacket (14).

11. Process in accordance with one of the above claims, **characterized in that** the housing jacket (14) is provided in step a) with two jacket shells (16, 18), which are to be positioned such that they adjoin each other in connection areas preferably extending in the direction of the housing longitudinal axis (L).

12. Process in accordance with one of the above claims, **characterized in that** at least one housing bottom (26) is provided in step b) as an outer bottom, which closes a housing interior (28) enclosed by the housing jacket (14) in the direction of the housing longitudinal axis (L), or/and that at least one housing bottom (26) is provided in step b) with at least one opening (36) for receiving an exhaust gas pipe (40).

13. Process in accordance with claim 2 and claim 12, **characterized in that** after step d), a step e) is carried out for fixing an exhaust gas pipe (40) to a housing bottom (26).

14. Muffler for an exhaust system of an internal combustion engine, comprising a muffler housing (12) with a housing jacket (14) elongated in the direction of a housing longitudinal axis (L) and with at least one housing bottom (26, 44) carried on the housing jacket (14), wherein at least one stop formation (50) with a plurality of stop projections (24) arranged at spaced locations from one another about the housing longitudinal axis (L) in the circumferential direction is provided for supporting a housing bottom (26) essentially in the direction of the housing longitudinal axis (L) **characterized in that** the housing jacket (14) comprises a radial expansion area (22) in at least one axial end area (20) and **in that** the stop projections (24) of the stop formation (50) are arranged in the radial expansion area (22) and project into a housing interior (28) surrounded by the housing jacket (14).

## Revendications

1. Procédé de fabrication d'un silencieux pour un système d'échappement d'un moteur à combustion interne, dans lequel le silencieux (10) à fabriquer comprend un boîtier de silencieux (12) avec une enveloppe de boîtier (14) allongée dans la direction d'un axe longitudinal de boîtier (L) et avec au moins un fond de boîtier (26, 44) porté sur l'enveloppe de boîtier (14), comprenant les étapes suivantes :
a) prévoir à l'enveloppe de boîtier (14) avec une formation de butée (50) en association avec au moins un fond de boîtier (26) à être porté sur l'enveloppe de boîtier (14),
b) prévoir au moins un fond de boîtier (26, 44) à être porté sur l'enveloppe de boîtier (14), et
c) positionner au moins un fond de boîtier (26) sur l'enveloppe de boîtier (14) de telle sorte que le fond de boîtier (26) soit en contact avec la formation de butée (50) qui lui est associée,
dans lequel, à l'étape a), l'enveloppe de boîtier (14) est pourvue, dans au moins une zone d'extrémité axiale (20), d'une zone d'expansion radiale (22) et, adjacente à la zone d'expansion radiale (22), d'une section d'extrémité essentiellement cylindrique (24) destinée à recevoir un fond de boîtier (26), et dans lequel une formation de butée (50) est prévue dans la zone d'expansion radiale (22) avec une pluralité de saillies de butée (54), qui sont disposées à des endroits espacés les uns des autres autour de l'axe longitudinal de boîtier (L) dans la direction circonférentielle et font saillie dans un intérieur de boîtier (28) entouré par l'enveloppe de boîtier (14).

2. Procédé selon la revendication 1, **caractérisé en ce qu'**après l'étape c), une étape d) est réalisée pour fixer au moins un fond de boîtier (26) qui est en contact avec une formation de butée (50) à l'enveloppe de boîtier (14).

3. Procédé selon la revendication 2, **caractérisé en ce que** lors de l'exécution de l'étape d), le fond de boîtier (26) est porté en contact avec la formation de butée (50) qui lui est associée, ou/et **en ce que** le fond de boîtier (26) est fixé lors de l'étape d) à l'enveloppe de boîtier (14) par liaison de matière, de préférence par soudage.

4. Procédé selon l'une des revendications précédentes, **caractérisé en ce que** dans au moins une formation de butée (50), au moins une et de préférence chaque saillie de butée (54) est prévuée par un renflement (60), de préférence en forme de pot, dirigé vers l'intérieur de boîtier (28) dans l'enveloppe de boîtier (14).

5. Procédé selon la revendication 4, **caractérisé en ce que** dans
au moins une formation de butée (50), au moins une et de préférence chaque saillie de butée (54) est assurée par une goupille de positionnement (56) traversant une ouverture (52) dans l'enveloppe de boîtier (14).

6. Procédé selon la revendication 2 et la revendication 5, **caractérisé en ce qu'**après la mise en oeuvre de l'étape d), toutes les goupilles de positionnement (56) associées à un fond de boîtier (26) fixé à l'enveloppe de boîtier (14) à l'étape c) sont retirées des ouvertures (52) les recevant et les ouvertures (52) sont refermées.

7. Procédé selon la revendication 6, **caractérisé en ce qu'**au moins une et de préférence chaque ouverture (52) est fermée par liaison de matière, de préférence par soudage, ou/et **en ce qu'**au moins une et de préférence chaque ouverture (52) est fermée par un élément de fermeture, de préférence un rivet de fermeture.

8. Procédé selon l'une des revendications précédentes, **caractérisé en ce qu'**au moins une formation de butée (50) est assurée par un renflement en forme de moulure qui s'étend dans la direction circonférentielle autour de l'axe longitudinal de boîtier (L) dans au moins certaines zones et fait saillie dans un intérieur de boîtier (28) entouré par l'enveloppe de boîtier.

9. Procédé selon l'une des revendications précédentes, **caractérisé en ce qu'**au moins un fond de boîtier (26, 44) à être porté sur l'enveloppe de boîtier (14) est pourvu à l'étape b) d'une zone de paroi de fond (30, 46) et d'une zone de paroi de liaison essentiellement cylindrique (32, 48), qui jouxte la zone de paroi de fond (30, 46) dans une zone circonférentielle extérieure, et **en ce que** le fond de boîtier (26) est positionné à l'étape c) avec sa zone de paroi de liaison (30) de manière à être en contact avec la formation de butée (50).

10. Procédé selon la revendication 2 et la revendication 9, **caractérisé en ce que** le fond de boîtier (14) est fixé à l'étape d) dans la zone de sa paroi de liaison (32) à l'enveloppe de boîtier (14).

11. Procédé selon l'une des revendications précédentes, **caractérisé en ce que** l'enveloppe de boîtier (14) est pourvue, à l'étape a), de deux enveloppes (16, 18) qui doivent être positionnées de manière à être accolées l'une à l'autre dans des zones de liaison s'étendant de préférence en direction de l'axe longitudinal (L) de boîtier.

12. Procédé selon l'une des revendications précédentes, **caractérisé en ce qu'**au moins un fond de boîtier (26) est prévu à l'étape b) comme fond extérieur, qui ferme un intérieur de boîtier (28) enfermé par l'enveloppe de boîtier (14) dans la direction de l'axe longitudinal du boîtier (L), ou/et **en ce qu'**au moins un fond de boîtier (26) est prévu à l'étape b) avec au moins une ouverture (36) pour recevoir un tuyau de gaz d'échappement (40).

13. Procédé selon la revendication 2 et la revendication 12, **caractérisé en ce qu'**après l'étape d), une étape e) est réalisée pour fixer un tuyau de gaz d'échappement (40) à un fond de boîtier (26).

14. Silencieux pour un système d'échappement d'un moteur à combustion interne, comprenant un boîtier de silencieux (12) avec une enveloppe de boîtier (14) allongée dans la direction d'un axe longitudinal de boîtier (L) et avec au moins un fond de boîtier (26, 44) porté sur l'enveloppe de boîtier (14), dans lequel au moins une formation de butée (50) avec une pluralité de projections de butée (24) disposées à des endroits espacés les uns des autres autour de l'axe longitudinal du boîtier (L) dans la direction circonférentielle est prévue pour soutenir un fond de boîtier (26) essentiellement dans la direction de l'axe longitudinal du boîtier (L), **caractérisé en ce que** l'enveloppe de boîtier (14) comprend une zone d'expansion radiale (22) dans au moins une zone d'extrémité axiale (20) et **en ce que** les projections de butée (24) de la formation de butée (50) sont disposées dans la zone d'expansion radiale (22) et font saillie dans un intérieur de boîtier (28) entouré par l'enveloppe de boîtier (14).
